(19) Europäisches Patentamt
European Patent Office
Office européen des brevets

(11) **EP 4 193 836 B1**

(12) **EUROPÄISCHE PATENTSCHRIFT**

(45) Veröffentlichungstag und Bekanntmachung des Hinweises auf die Patenterteilung:
**08.07.2026   Patentblatt 2026/28**

(21) Anmeldenummer: **22210215.4**

(22) Anmeldetag: **29.11.2022**

(51) Internationale Patentklassifikation (IPC):
**A21B 1/10** (2006.01)

(52) Gemeinsame Patentklassifikation (CPC):
**A21B 1/10**

(54) **BACKOFENANLAGE**

BAKING OVEN

FOUR AU CUISSON

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **09.12.2021  DE 102021214072**

(43) Veröffentlichungstag der Anmeldung:
**14.06.2023   Patentblatt 2023/24**

(73) Patentinhaber: **Heuft Besitzgesellschaft GmbH & Co. KG**
**56745 Bell/Eifel (DE)**

(72) Erfinder: **FÜLBIER, Christoph**
**56745 Bell (DE)**

(74) Vertreter: **Bardehle Pagenberg Partnerschaft mbB**
**Patentanwälte Rechtsanwälte**
**Prinzregentenplatz 7**
**81675 München (DE)**

(56) Entgegenhaltungen:
| | |
|---|---|
| EP-A1- 1 600 057 | EP-A1- 2 746 148 |
| EP-A2- 2 339 246 | EP-B1- 2 746 148 |
| EP-B1- 2 956 536 | DE-A1- 102009 048 360 |
| DE-A1- 2 715 954 | US-A1- 2005 279 342 |

**Beschreibung**

**1. Technisches Gebiet**

Die vorliegende Erfindung betrifft einen Thermoölerhitzer, zum Erhitzen von Thermoöl für Backofenanlagen. Die vorliegende Erfindung betrifft eine Backofenanlage mit einem Thermoölerhitzer, bei dem die benötigte Wärme auf hybride Art und Weise, also mit mindestens zwei unterschiedlichen Arten von Wärmeerzeugern erzeugt wird.

**2. Stand der Technik**

In größeren handwerklichen und industriellen Backofenanlagen kann Thermoöl als Wärmeträgermedium verwendet werden. Thermoöl hat den Vorteil, dass es drucklos bis auf Temperaturen von 300°C und darüber erhitzbar ist, die in Backofenanlagen benötigt werden.

Im Regelfall wird das Thermoöl hierzu in einem befeuerten Heizkessel durch Verbrennung von Öl, Gas oder Biomasse, wie Holzpellets oder Holz-Hackschnitzel, erhitzt und dann mittels einer Ringleitung aus Vorlauf- und Rücklaufleitung und einer elektrischen Pumpe den Thermoöl-Backöfen zugeführt. Das erhitzte Thermoöl verlässt den Heizkessel durch eine Vorlaufleitung, durchströmt die Backöfen, heizt diese auf die gewünschte Temperatur auf und kühlt dabei ab. Das abgekühlte Thermoöl, wird über eine Rücklaufleitung dem befeuerten Heizkessel zugeführt, der das Thermoöl wieder aufheizt.

Befeuerte Heizkessel benötigen einen Brennstoff, wie Öl, Gas oder Biomasse, der bei der Verbrennung klimaschädliche Gase, u.a. $CO_2$ freisetzt. Durch Verbesserungen an den befeuerten Heizkesseln, etwa durch die Brennwerttechnik, konnte in den letzten Jahren die Gesamtenergieeffizienz der Heizkessel verbessert werden. Beispiele für Öl- oder Gas-beheizte Backöfen, bei dem die Abwärme der noch heißen Abgase genutzt wird, sind aus den Offenlegungsschriften DE 101 07 086 A1 oder DE 10 2009 048 360 A1 bekannt.

Jedoch sind aufgrund des hohen benötigten Temperaturniveaus von Thermoöl von 300°C und darüber, derartige Effizienzverbesserungen physikalisch limitiert und derzeit weitestgehend ausgereizt.

Daneben sind auch konventionelle Elektroerhitzer für Thermoöl bekannt. Diese werden jedoch aufgrund des in der Regel hohen Strompreises selten eingesetzt. Wo jedoch günstiger Strom zur Verfügung steht, oder räumliche oder bauliche Gegebenheiten einen befeuerten Erhitzer nicht zulassen, finden Elektroerhitzer Anwendung.

Die Patentschrift DE 10 2013 223 278 B4 betrifft ein Haushaltsgerät, welches mit zwei unterschiedlichen Energieträgern betrieben werden kann. Mittels einer elektronischen Steuerungsvorrichtung ist ein Betriebsartenwechsel derart möglich, dass ein Mikroklima in einem Nutzraum unverändert bleibt. Typische solche Haushaltsgeräte sind beispielsweise Backöfen, Dampfgarer, Kombigeräte mit Mikrowelle, Kühlschränke oder Kochfelder. Hierbei weist das Haushaltsgerät eine erste Betriebsart auf, während der ausschließlich eine erste Heizeinrichtung eine Heizleistung erzeugt, und mindestens eine zweite Betriebsart, während der ausschließlich eine zweite Heizeinrichtung eine Heizleistung erzeugt. Die Heizeinrichtungen sind hierbei strömungstechnisch unabhängig voneinander.

Das Dokument EP 2 746 148 A1 betrifft ein Binnentankschiff zum Transportieren von Rohöl. Das Tankschiff weist ein Frachttank-Heizsystem auf, um das transportierte Rohöl auf Temperaturen von 30°C bis 60°C zu halten, damit es fließfähig bleibt. Das Heizsystem verwendet Thermoöl, welches in einem geschlossenen Heizkreislauf durch einen Wärmetauscher im Frachttank zirkuliert. Ein wesentliches Merkmal des Heizsystems ist, dass das Thermoöl über einen weiteren Wärmetauscher durch das Kühlwasser des Antriebsmotors beheizt wird. Lediglich in bestimmten Betriebszuständen, wenn die Abwärme des Motors nicht ausreicht oder kurz vor dem Entladen des Rohöls, soll mittels eines kraftstoffbetriebenen Brenners und/oder elektrisch geheizt werden.

Das Dokument DE 27 15 954 A1 offenbart eine Einrichtung zur direkten Ausnutzung von Solarenergie mit die Sonnenstrahlen reflektierenden Parabelrinnen, in deren Brennachse ein von Thermoöl durchströmtes Heizrohr angeordnet ist.

Das Dokument EP 1 600 057 A1 offenbart einen Waffelbackofen mit mehreren ringförmig umlaufenden Backplattenpaaren. Die Backplatten sind mittels Thermoöl beheizt, das mittels unterschiedlicher alternativer Wärmequellen erhitzt werden kann.

Das Dokument EP 2 956 536 B1 offenbart eine Vorrichtung und ein Verfahren zum Erwärmen eines fermentierbaren Ausgangsstoffes zur Getränkeherstellung. Hierbei wird eine Erwärmung von Thermoöl mittels elektrischer Heizelemente in Betracht gezogen.

Weiterer Stand der Technik ist aus der DE 10 2009 048360 A1 bekannt.

Es ist daher die Aufgabe der vorliegenden Erfindung das Erhitzen von Thermoöl für Backofenanlagen insgesamt umweltverträglicher zu gestalten und hierzu einen entsprechenden Thermoölerhitzer für eine Backofenanlage bereitzustellen.

**3. Zusammenfassung der Erfindung**

Die oben genannte Aufgabe wird gelöst durch eine Backofenanlage gemäß Anspruch 1, sowie durch ein Verfahren zum Beheizen einer Backofenanlage gemäß Anspruch 11.

Insbesondere wird die oben genannte Aufgabe gelöst durch einen Hybrid-Thermoölerhitzer für eine Backofenanlage, aufweisend einen elektrischen Erhitzer zum Erhitzen von Thermoöl und einen befeuerten Erhitzer zum Erhitzen des Thermoöls, wobei der elektrische Erhitzer und der befeuerte Erhitzer strömungstechnisch in Reihe verschaltet sind.

Durch das Vorsehen eines elektrischen Erhitzers zusätzlich zu einem befeuerten Erhitzer ist es möglich, Thermoöl durch regenerativ gewonnenen elektrischen Strom zu erhitzen, bzw. vorzuerhitzen oder nachzuerhitzen. Dies ist insbesondere dann sinnvoll, wenn der benötigte elektrische Strom vom Betreiber der Backofenanlage selbst produziert wird, beispielsweise mittels einer Photovoltaikanlage, einer Windkraftanlage oder einer Biogasanlage. Das Erhitzen des Thermoöls mit regenerativ gewonnenem elektrischen Strom senkt den Gesamtausstoß von klimaschädlichen Verbrennungsgasen, beispielsweise von $CO_2$. Da jedoch der selbsterzeugte regenerativ gewonnenen elektrischen Strom in der Regel nicht mit konstanter Leistung zur Verfügung steht, muss durch den befeuerten Erhitzer, der strömungstechnisch mit dem elektrischen Erhitzer in Reihe geschaltet ist, das Thermoöl bei Bedarf zugeheizt werden. Durch die Reihenschaltung kann einer der Erhitzer das Thermoöl auf eine Zwischentemperatur bringen und der andere Erhitzer (nach-)erhitzt das Thermoöl auf die für die Backofenanlage benötigte Vorlauftemperatur. Hierbei kann bevorzugt regelungstechnisch die momentan verfügbare Leistung an regenerativem Strom maximal ausgenutzt werden, wobei durch den befeuerten Erhitzer nur die zusätzlich benötigte Wärmeleistung zugeheizt werden muss. Damit kann der selbst erzeugte regenerative Strom bestmöglich ausgenutzt werden, ohne dass dieser beispielsweise ins Netz zurückgespeist werden muss. Durch die Reihenschaltung von elektrischem Erhitzer und befeuertem Erhitzer wird ein Hybrid-Thermoölerhitzer bereitgestellt, der die Vorteile von beiden Beheizungsarten in sich vereint, nämlich die ökologische und ökonomische Verwendung von selbst erzeugtem regenerativem Strom und die ökonomische Erzeugung der zusätzlich benötigten Wärme durch möglichst effiziente Verbrennung von Gas, Öl oder Biomasse.

Da durch die Reihenschaltung der Erhitzer die Peripheriegeräte des Hybrid-Thermoölerhitzers, wie beispielsweise Pumpe, Filter, Regelventile, Sicherheitsbauteile und Steuerung von beiden Erhitzern gemeinsam genutzt werden, ergibt sich ein insgesamt kostengünstiger Thermoölerhitzer.

Weiterhin kann durch ein Vorheizen von kaltem Thermoöl mit dem befeuerten Erhitzer ein "Kaltstart" für den elektrischen Erhitzer vermieden werden. Ein solcher Kaltstart stellt einen kritischen Betriebszustand für elektrische Erhitzer dar, da dadurch das Thermoöl und elektrische Heizstäbe des elektrischen Erhitzers stark belastet werden.

Weiterhin besitzt der Hybrid-Thermoölerhitzer gewisse Notlaufeigenschaften und kann für den Fall, dass der befeuerte Anteil in Störung sein sollte (z.B. bei einer Brennerstörung oder Brennstoff-Versorgungsstörung), mit Strom ein Notbetrieb aufrechterhalten. Damit können mit der Wärmeleistung des elektrischen Erhitzers zumindest einige der thermischen Verbraucher der Backofenanlage weiterbetrieben werden.

Gegenüber von separaten elektrisch betriebenen Thermoölerhitzern oder Thermoöl-Heizkesseln, kann ein Hybrid-Thermoölerhitzer als eine Einheit mit äußerst platzsparender und kompakter Baugröße bereitgestellt werden. Weiterhin können aufgrund einer geringen Gesamtoberfläche des Hybrid-Thermoölerhitzers die thermischen Abstrahlverluste minimiert werden, was die Gesamteffizienz des Hybrid-Thermoölerhitzers verbessert.

Weiterhin weist ein Hybrid-Thermoölerhitzer gegenüber vergleichbar dimensionierten Thermoöl-Heizkesseln eine hohe Reaktionsgeschwindigkeit auf, da der Hybrid-Thermoölerhitzer aufgrund der mindestens zwei Erhitzer, eine hohe thermische Gesamtleistung aufweist, und somit keiner der Erhitzer erst langwierig in einer Anfahrschaltung warmgefahren werden muss, bevor er Wärmeleistung einspeisen kann. Weiterhin weist der Hybrid-Thermoölerhitzer aufgrund des elektrischen Erhitzers ein sehr schnelles und genaues Regelverhalten auf, wodurch die Vorlauftemperatur sehr genau geregelt werden kann und sich damit auch Gesamtenergieverbrauch verringert.

In einer ersten bevorzugten Ausführungsform ist der elektrische Erhitzer strömungstechnisch vor dem befeuerten Erhitzer verschaltet. Damit kann mittels des elektrischen Erhitzers, je nach zur Verfügung stehender Leistung an regenerativem Strom, der Volumenstrom des Thermoöls elektrisch auf eine Zwischentemperatur vorgeheizt werden. Mittels des strömungstechnisch nachgeschalteten befeuerten Erhitzers wird der Volumenstrom des Thermoöls dann auf die gewünschte Vorlauftemperatur nachgeheizt. Diese Verschaltungsart hat den Vorteil, dass die Regelung des befeuerten Erhitzers sehr einfach aufgebaut werden kann und die vom elektrischen Erhitzer eingebrachte Wärmeleistung dem befeuerten Heizkessel nicht bekannt sein muss.

In einer zweiten bevorzugten Ausführungsform ist der elektrische Erhitzer strömungstechnisch nach dem befeuerten Erhitzer verschaltet. Damit erhitzt der befeuerte Erhitzer den Volumenstrom des Thermoöls lediglich auf eine Temperatur unter der gewünschten Vorlauftemperatur der Backofenanlage. Dies hat den Vorteil, dass die Abgastemperatur des befeuerten Erhitzers niedriger sein kann als bei der ersten Ausführungsform, wodurch die Gesamtenergieverluste verringert werden. Weiterhin kann die Regelhysterese des befeuerten Erhitzers erhöht werden, da dieser nicht mehr an der zulässigen Temperaturobergrenze operieren muss. Damit werden häufige Regelabschaltungen des Brenners reduziert, was weiterhin die Gesamteffizienz erhöht. Bei dieser zweiten bevorzugten Ausführungsform steuert die Regelung des Hybrid-Thermoölerhitzers den befeuerten Erhitzer bevorzugt so, dass durch ein elektrisches Nachheizen mit der aktuell verfügbaren regenerativen Strommenge die gewünschte Vorlauftemperatur des Thermoöls erreicht wird.

In einer dritten bevorzugten Ausführungsform ist der elektrische Erhitzer strömungstechnisch vor dem befeuerten Erhitzer verschaltet, und ein weiterer elektrischer Erhitzer ist strömungstechnisch nach dem befeuerten Erhitzer verschaltet. Damit werden die Vorteile der ersten und der zweiten Ausführungsform miteinander kombiniert. Der befeuerte Erhitzer kann in einem für ihn optimalen Temperaturbereich und mit optimaler Regelhysterese betrieben werden. Dies hat insbesondere bei Biomasse-befeuerten Erhitzern, wie Pelletkesseln oder Hackschnitzelkesseln eine Verbesserung des Abgasverhaltens zur Folge. Durch den vorgeschalteten elektrischen Erhitzer wird das Thermoöl, je nach verfügbarer Leistung an regenerativem Strom, auf eine möglichst hohe erste Zwischentemperatur aufgeheizt, um die regenerative Wärmeerzeugung zu optimieren. Der zwischengeschaltete befeuerte Erhitzer arbeitet in einer für ihn optimierten Betriebsweise und erhöht die Temperatur des Thermoöls soweit, dass der nachgeschaltete elektrische Erhitzer das Thermoöl dann auf die gewünschte Vorlauftemperatur der Backofenanlage bringen kann. Hierbei gleicht der nachgeschaltete elektrische Erhitzer die Regelhysterese des befeuerten Erhitzers aus und regelt dabei sehr exakt die gewünschte Vorlauftemperatur des Thermoöls ein.

Bevorzugt ist die Wärmeleistung des elektrischen Erhitzers kleiner als die Wärmeleistung des befeuerten Erhitzers. Die Wärmeleistung des elektrischen Erhitzers richtet sich bevorzugt nach der maximal verfügbaren Leistung an zur Verfügung stehendem regenerativem Strom, um diesen möglichst vollständig auszunutzen. Die maximal verfügbare regenerative elektrische Leistung ist jedoch in der Regel kleiner als die benötigte Gesamtwärmeleistung der zu beheizenden Backofenanlage. Entsprechend klein kann der elektrische Erhitzer ausgelegt werden. Der befeuerte Erhitzer wird indessen bevorzugt so bemessen, dass er die von der Backofenanlage benötigte thermische Leistung alleine erzeugen kann.

Bevorzugt ist Leistung des elektrischen Erhitzers kleiner als die benötigte Gesamtwärmeleistung einer vom Hybrid-Thermoölerhitzer zu beheizenden Backofenanlage. Damit kann der elektrische Erhitzer technisch und ökonomisch effizient und mit minimierten thermischen Verlusten ausgelegt werden. Er ist hierbei jedoch nicht in der Lage, die zu beheizende Backofenanlage bei maximaler Wärmeanforderung alleine zu beheizen. Entsprechend wird in den meisten Fällen der befeuerte Erhitzer in Betrieb sein und auf die benötigte Wärmeanforderung zuheizen.

Bevorzugt wird der elektrische Erhitzer durch Strom aus regenerativen Quellen, insbesondere durch Photovoltaikstrom und/oder Windstrom und/oder Biogasstrom betrieben. Damit verringert der Hybrid-Thermoölerhitzer den Ausstoß von klimaschädlichen Verbrennungsgasen.

Bevorzugt weist der Hybrid-Thermoölerhitzer bzw. eine Backofenanlage mit Hybrid-Thermoölerhitzer weiterhin eine Photovoltaikanlage auf, die den elektrischen Erhitzer mit Photovoltaikstrom versorgt, und/oder eine Windkraftanlage, die den elektrischen Erhitzer mit Windstrom versorgt, und/oder eine Biogasanlage, die den elektrischen Erhitzer mit Biogasstrom versorgt.

Bevorzugt ist der befeuerte Erhitzer ein Thermoöl-Gaskessel, ein Thermoöl-Ölkessel oder ein Thermoöl-Biomassekessel. Der befeuerte Erhitzer wird somit bevorzugt mit Gas bzw. Erdgas, Heizöl oder Biomasse, beispielsweise Holzpellets oder Holzhackschnitzel, als jeweiligem Brennstoff betrieben. Der befeuerte Erhitzer kann auch mit einem Pflanzenölbrenner ausgerüstet sein, um regenerativ erzeugtes Pflanzenöl, beispielsweise Rapsöl, als Brennstoff für den befeuerten Erhitzer zu verwenden.

Bevorzugt umfasst der elektrische Erhitzer ein oder mehrere elektrische Heizregister. Mit diesen elektrischen Heizregistern kann der elektrische Erhitzer modular aufgebaut werden, wobei seine maximale thermische Leistung durch die Anzahl der verwendeten elektrischen Heizregister eingestellt werden kann.

Bevorzugt sind der elektrische Erhitzer und der befeuerte Erhitzer in einem gemeinsamen Gehäuse angeordnet. Damit bildet der Hybrid-Thermoölerhitzer eine Baueinheit. Diese Baueinheit benötigt nur einen einzigen elektrischen und einen einzigen hydraulischen Anschluss aus Vor- und Rücklauf zur Verbindung mit der Backofenanlage.

Die oben genannte Aufgabe wird gelöst durch eine Backofenanlage aufweisend einen Hybrid-Thermoölerhitzer, wie vorstehend beschrieben, und mindestens einen Backofen, der mittels Thermoöl beheizt ist.

Bevorzugt weist die Backofenanlage weiterhin einen Thermoöl-Pufferspeicher auf. Dieser kann bevorzugt hydraulisch parallel zum elektrischen Erhitzer verschaltet sein. Bevorzugt ist der Thermoöl-Pufferspeicher jedoch nicht parallel zum befeuerten Erhitzer verschaltet. Ein solcher Thermoöl-Pufferspeicher kann Schwankungen bei der Wärmebereitstellung und des Wärmebedarfs puffern. Insbesondere können damit Schwankungen der elektrischen Wärmebereitstellung ausgeglichen werden, die aufgrund von Schwankungen in der Leistung des regenerativ gewonnenen elektrischen Stroms entstehen können.

Die oben genannte Aufgabe wird auch gelöst durch ein Verfahren zum Beheizen einer Backofenanlage aufweisend die folgenden Schritte:

    a. Bereitstellen eines Hybrid-Thermoölerhitzers aufweisend einen elektrischen Erhitzer und einen befeuerten Erhitzer, wobei die Erhitzer in Reihe verschaltet sind;
    b. Aufheizen von Thermoöl mittels des elektrischen Erhitzers;
    c. Aufheizen des Thermoölsmittels des befeuerten Erhitzers; und
    d. Beheizen eines Backofens mit dem Thermoöl.

Bevorzugt wird zum Aufheizen von Thermoöl mittels des elektrischen Erhitzers Strom aus regenerativen Quellen, insbesondere Photovoltaikstrom und/oder Windstrom und/oder Biogasstrom, verwendet.

Bevorzugt wird zum Aufheizen von Thermoöl mittels des befeuerten Erhitzers Biomasse, beispielsweise Holzpellets oder Holz-Hackschnitzel, oder Pflanzenöl, beispielsweise Rapsöl, verwendet. Damit kann der Hybrid-Thermoölerhitzer $CO_2$-neutral betrieben werden.

Bevorzugt erfolgt das Aufheizen von Thermoöl mittels des elektrischen Erhitzers auf ein Temperaturniveau unterhalb einer benötigten Vorlauftemperatur und anschließend das Aufheizen von Thermoöl mittels des befeuerten Erhitzers auf die benötigte Vorlauftemperatur.

Bevorzugt erfolgt das Aufheizen von Thermoöl mittels des elektrischen Erhitzers auf ein erstes Temperaturniveau unterhalb einer benötigten Vorlauftemperatur, anschließend das Aufheizen von Thermoöl mittels des befeuerten Erhitzers auf ein zweites, höheres Temperaturniveau unterhalb der benötigten Vorlauftemperatur und anschließend ein weiteres Aufheizen von Thermoöl durch einen weiteren elektrischen Erhitzer auf die benötigte Vorlauftemperatur.

## 4. Kurze Beschreibung der Figuren

Im Folgenden werden bevorzugte Ausführungsformen der vorliegenden Erfindung anhand der beigefügten Figuren dargestellt. Dabei zeigen:

Fig. 1 eine schematische Ansicht einer Ausführungsform einer Backofenanlage mit einer ersten Ausführungsform eines Hybrid-Thermoölerhitzers;

Fig. 2 eine schematische Ansicht einer zweiten Ausführungsform eines Hybrid-Thermoölerhitzers;

Fig. 3 eine schematische Ansicht einer dritten Ausführungsform eines Hybrid-Thermoölerhitzers; und

Fig. 4 eine Ausführungsform eines Hydraulikschaltplans des Hybrid-Thermoölerhitzers mit einem Thermoöl-Pufferspeicher.

## 5. Detaillierte Beschreibung bevorzugter Ausführungsformen

Im Folgenden werden bevorzugte Ausführungsformen der vorliegenden Erfindung mit Bezug auf die beigefügten Figuren im Detail beschrieben.

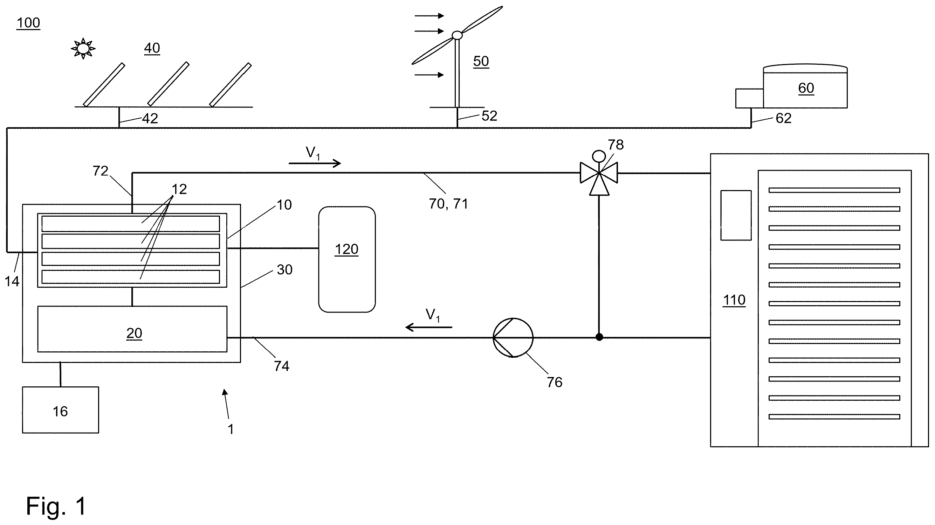

Fig. 1 zeigt eine Backofenanlage 100 mit einer ersten Ausführungsform eines Hybrid-Thermoölerhitzers 1 und mindestens einem thermoölbeheizten Backofen 110. Der Backofen 110 steht stellvertretend für eine Anzahl von thermoölbeheizten Backöfen einer Backanlage 100. Der Hybrid-Thermoölerhitzer 1 erhitzt Thermoöl 70, das sich in einem Thermoölkreislauf 71 befindet. Zum Beheizen des Backofens 110 ist der Hybrid-Thermoölerhitzer 1 mittels einer Vorlaufleitung 72 und einer Rücklaufleitung 74 hydraulisch mit dem Backofen 110 verbunden. Beim Backvorgang kühlt das Thermoöl 70 im Backofen 110 ab, so dass dieser einen Wärmeverbraucher darstellt. Das Thermoöl 70 wird mittels einer elektrischen Pumpe 76 durch den Thermoölkreislauf gepumpt.

Der Hybrid-Thermoölerhitzer 1 weist einen elektrischen Erhitzer 10 und einen befeuerten Erhitzer 20 auf, die beide zum Erhitzen des Thermoöls 70 eingerichtet sind, und die sich bevorzugt in einem gemeinsamen Gehäuse 30 befinden. Der elektrische Erhitzer 10 und der befeuerte Erhitzer 20 sind strömungstechnisch in Reihe geschaltet. In der in Fig. 1 dargestellten ersten Ausführungsform durchströmt das Thermoöl 70 zunächst den befeuerten Erhitzer 20 und danach den elektrischen Erhitzer 10.

Die thermische Leistung des befeuerten Erhitzers 20 beträgt beispielsweise zwischen 100 kW und 2000 kW. Typische Wärmeleistungen des befeuerten Erhitzers 20 können beispielsweise 110, 140, 210, 260, 320, 420, 500, 700, 1000, 1500 und 1900 kW betragen. Die thermische Wärmeleistung des elektrischen Erhitzers 10 beträgt beispielsweise zwischen 100 kW und 400 kW. Typische thermische Wärmeleistungen des elektrischen Erhitzers betragen beispielsweise 128, 160, 192, 224, 256, 288 und 320 kW.

Der elektrische Erhitzer 10 kann ein oder mehrere elektrische Heizregister 12 aufweisen. Mit diesen elektrischen Heizregistern 12 kann der elektrische Erhitzer 10 modular aufgebaut werden. Damit kann die maximale thermische Leistung des elektrischen Erhitzers 10 durch die Anzahl der verwendeten elektrischen Heizregister bestimmt werden. Die elektrischen Heizregister 12 sind bevorzugt ebenfalls hydraulisch in Reihe geschaltet und werden nacheinander durchströmt. Jedes elektrische Heizregister 12 weist einen oder mehrere elektrische Heizstäbe (nicht dargestellt) auf, die sich bei Stromdurchfluss erhitzen. Ein einzelnes elektrisches Heizregister 12 hat beispielsweise eine thermische Leistung von 10 bis 50 kW, bevorzugt 32 kW. Damit kann die thermische Leistung des elektrischen Erhitzers 10 in Schritten von beispielsweise 32 kW festgelegt werden.

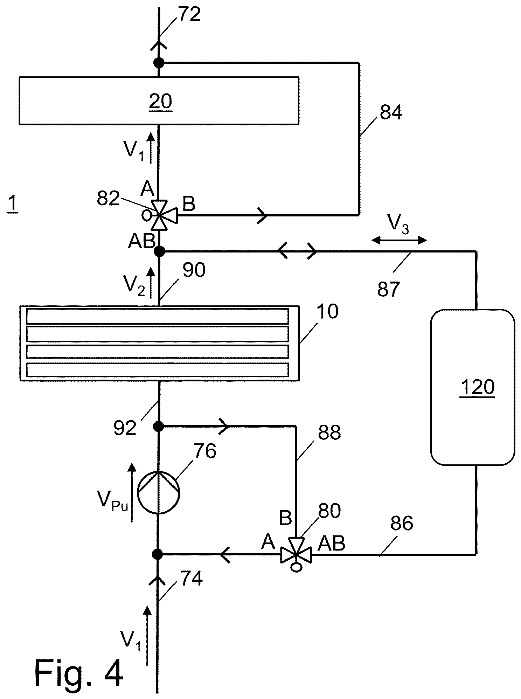

In der Regel hat der elektrische Erhitzer 10 bevorzugt eine kleinere thermische Leistung als der befeuerte Erhitzer 20 bzw. hat eine kleinere thermische Leistung als die Gesamtanlage 100 benötigt. Jedoch kann bei ausreichender Verfügbarkeit von regenerativem Strom zumindest zeitweise ausschließlich mit dem elektrischen Erhitzer 10 geheizt werden. Auch bei einer Störung oder einem Ausfall des befeuerten Erhitzers 20 kann ein thermisch gleich großer elektrischer Erhitzer 20 eine volle Redundanz darstellen, wenn er zumindest teilweise oder übergangsweise mit Netz-Strom betrieben werden kann. Durch einen Thermoöl-Bypass 82, 84 (s. Fig. 4) und/oder eine Abgasklappe am befeuerten Erhitzer 20 können unerwünschte Verluste des befeuerten Erhitzers 20, die entstehen, da die Kesselrohrschlange des befeuerten Erhitzers strömungstechnisch mit dem Schornstein verbunden ist, vermieden werden, solange der elektrische Erhitzer 10 die Anlage 100 allein beheizt.

Im Thermoölkreislauf 71 kann sich zwischen Vorlaufleitung 72 und Rücklaufleitung 74 und vor den Backöfen 110 ein Drei-Wege-Ventil 78 befinden, um beim Anfahren der Backofenanlage, das Thermoöl im Hybrid-Thermoölerhitzer 1 schnell auf eine Betriebstemperatur zur bringen, bevor dann die Backöfen 110 zugeschaltet werden.

Weiterhin kann ein Thermoöl-Pufferspeicher 120 in den Thermoölkreislauf integriert sein, der in Fig. 1 nur schematisch eingezeichnet ist. Dieser kann beispielsweise nach dem Backbetrieb mit heißem Thermoöl beladen werden und die darin enthaltene Wärmeenergie zumindest zum Teil bis zum erneuten Anfahren der Backofenanlage 100 zwischenspeichern.

Bei Stromüberschüssen oder Teillast der Backofenanlage 100 kann der Thermoöl-Pufferspeicher 120 geladen werden. Bei hoher Last der Backofenanlage 100 oder wenig regenerativem Strom wird der Thermoöl-Pufferspeicher 120 entladen. Beim Entladen ist die Speichervorlauftemperatur entscheidend. Solange diese höher ist, als die Vorlauftemperatur des elektrischen Erhitzers 10 wird der Thermoöl-Pufferspeicher 120 entladen. Umgekehrt, wenn die Vorlauftemperatur des elektrischen Erhitzers 10 über der Speichertemperatur liegt und der aktuelle Leistungsbedarf der Backofenanlage 100 bereits gedeckt ist, wird der Thermoöl-Pufferspeicher 120 geladen.

Wie in Fig. 4 im Detail dargestellt, kann der Thermoöl-Pufferspeicher 120 hydraulisch parallel zum elektrischen Erhitzer 10 verschaltet werden. In der in Fig. 4 dargestellten bevorzugten Ausführungsform wird der Pufferspeicher 120 mit einer ersten Leitung 86 über ein Drei-Wege-Ventil 80 an die Rücklaufleitung 74 angeschlossen. Die Rücklaufleitung 74 führt über die Pumpe 76 und eine Einlass-Leitung 92 zum Einlass des elektrischen Erhitzers 10. Mit einer zweiten Leitung 87 ist der Thermoöl-Pufferspeicher 120 an eine Auslass-Leitung 90 des elektrischen Erhitzers angeschlossen. Eine dritte Leitung 88 führt von der Einlass-Leitung 92 zum Drei-Wege-Ventil 80.

Durch die Verschaltung des Thermoöl-Pufferspeichers 120 ergeben sich unterschiedliche Volumenströme für Backofenanlage 100 und den elektrischen Erhitzer 10 beim Laden und beim Entladen des Thermoöl-Pufferspeichers 120. Bei Bedarf muss über die Drehzahl der Pumpe 76 dies ausgeglichen werden.

Wenn das Drei-Wege-Ventil 80 in die Position A-AB geschaltet ist, kann der Thermoöl-Pufferspeicher 120 durch den elektrischen Erhitzer 10 geladen werden. Hierbei wird mittels der Pumpe 76 ein Teil-Kreislauf aus elektrischem Erhitzer 10 und Thermoöl-Pufferspeicher 120 betrieben. Beim Laden des Thermoöl-Pufferspeicher 120 ergeben sich die folgenden Volumenströme:

$$V_{Pu} = V_2 = V_1 + V_3$$

$V_{Pu}$ = Volumenstrom durch die Pumpe 76
$V_1$ = Volumenstrom durch die Backofenanlage 100
$V_2$ = Volumenstrom durch den elektrischen Erhitzer 10
$V_3$ = Volumenstrom durch den Thermoöl-Pufferspeicher 120

Beim Laden strömt durch den elektrischen Erhitzer 10 der volle Volumenstrom der Pumpe ($V_{Pu} = V_2$). Die Anlage erhält jedoch einen Volumenstrom $V_1$ der um $V_3$ verringert ist.

Das Drei-Wege-Ventil 80 kann auch so geschaltet werden, dass es in einer Position B-AB kaltes Thermoöl aus der Rücklaufleitung 74 über die Pumpe 76, die dritte Leitung 88 und die erste Leitung 86 in den Thermoöl-Pufferspeicher 120 leitet, und dabei das dort gespeicherte heiße Thermoöl 70 über die Leitung 87 in den Thermoölkreislauf 71 eingeleitet wird. Hierbei wird der Thermoöl-Pufferspeicher 120 thermisch entladen. Beim Entladen des Thermoöl-Pufferspeichers 120 ergeben sich die folgenden Volumenströme:

$$V_{PU} = V_2 = V_1 + V_3$$

Beim Entladen erhält der elektrische Erhitzer 10 daher einen um den Volumenstrom $V_3$ verringerten Volumenstrom $V_2$.

Selbstverständlich erlaubt das Drei-Wege-Ventil 80 auch beliebige Zwischenstellungen zwischen den Stellungen A-AB und B-AB so dass das Laden bzw. Entladen auch während des Betriebs der Backofenanlage 100, je nach zur Verfügung stehendem regenerativem Strom und aktuell benötigter Heizleistung, erfolgen kann.

Der Volumenstrom $V_2$ darf einen minimalen Wert $V_{2\,min}$ nicht unterschreiten, damit an den Heizelementen des elektrischen Erhitzers 10 die zulässige Filmtemperatur des Thermoöls gemäß Herstellerangabe nicht überschritten wird. Mit höherer Heizflächenbelastung oder geringerer Fließgeschwindigkeit erhöht sich nämlich die Filmtemperatur an den Heizelementen des elektrischen Erhitzers 10. Der Wert $V_{2\,min}$ kann durch eine Filmtemperaturberechnung ermittelt werden.

Der Hybrid-Thermoölerhitzer 1 kann auch einen Bypass 82, 84 aufweisen, mit dem das Thermoöl 70 um den befeuerten Erhitzer 20 herumgeleitet werden kann. Dies ist insbesondere vorteilhaft, um die Energieverluste des befeuerten Erhitzers 20 zu vermeiden, wenn dieser außer Betrieb ist. Der Bypass besteht aus einem Drei-Wege-Ventil 82, welches hydraulisch vor dem Eingang des befeuerten Erhitzers 20 angeordnet ist, und einer Bypassleitung 84, die vom Drei-Wege-Ventil 82 zur Vorlaufleitung 72 hydraulisch hinter dem Ausgang des befeuerten Erhitzers 20 führt.

Der Hybrid-Thermoölerhitzer 1 bzw. die Backofenanlage 100 kann, wie in Fig. 1 dargestellt, weiterhin eine Photovoltaikanlage 40 aufweisen, die den elektrischen Erhitzer 10 mit Photovoltaikstrom 42 versorgt. Alternativ oder zusätzlich kann eine Windkraftanlage 50 vorhanden sein, die Windstrom 52 bereitstellt. Zudem kann alternativ oder zusätzlich eine Biogasanlage 60 bereitgestellt werden, die den elektrischen Erhitzer 10 mit Biogasstrom 62 versorgt. Alle diese Stromquellen 40, 50, 60 erzeugen regenerativen, klimaneutralen Strom 42, 52, 62. Dieser regenerative Strom wird über einen Stromanschluss 14 dem elektrischen Erhitzer 10 bereitgestellt. Eine Steuerung 16 steuert die Verteilung (elektrisch/befeuert) der Wärmeerzeugung des Hybrid-Thermoölerhitzers 1 entsprechend der momentan verfügbaren Leistung an regenerativem Strom.

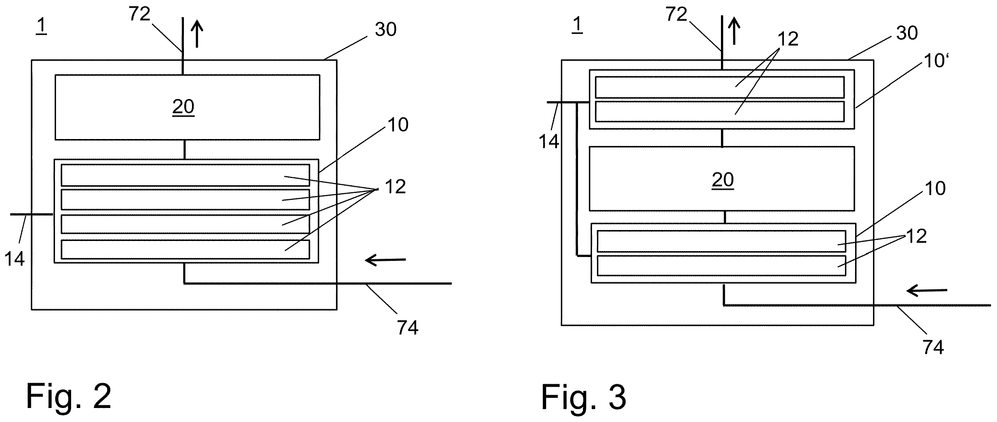

In einer zweiten, in Fig. 2 dargestellten Ausführungsform durchströmt das Thermoöl 70 zunächst den elektrischen Erhitzer 10 und danach den befeuerten Erhitzer 20.

In einer dritten, in Fig. 3 dargestellten Ausführungsform durchströmt das Thermoöl 70 zunächst einen ersten elektrischen Erhitzer 10 und danach den befeuerten Erhitzer 20 und anschließend einen weiteren, zweiten elektrischen Erhitzer 10'.

Die Wärmeleistung des elektrischen Erhitzers 10, oder die Gesamtwärmeleistung des ersten und zweiten elektrischen Erhitzers 10, 10', kann kleiner sein als die Wärmeleistung des befeuerten Erhitzers 20. Insbesondere kann die Wärmeleistung des elektrischen Erhitzers 10, oder die Gesamtwärmeleistung des ersten und zweiten elektrischen Erhitzers 10, 10', kleiner sein als die benötigte Gesamtwärmeleistung der zu beheizenden Backofenanlage.

Bezugszeichenliste:

| | |
|---|---|
| 1 | Hybrid-Thermoölerhitzer |
| 10 | elektrischer Erhitzer |
| 12 | elektrische Heizregister |
| 14 | Stromanschluss |
| 16 | Steuerung |
| 20 | befeuerter Erhitzer |
| 30 | Gehäuse |
| 40 | Photovoltaikanlage |
| 42 | Photovoltaikstrom |
| 50 | Windkraftanlage |
| 52 | Windstrom |
| 60 | Biogasanlage |
| 62 | Biogasstrom |
| 70 | Thermoöl |
| 71 | Thermoölkreislauf |
| 72 | Vorlaufleitung |
| 74 | Rücklaufleitung |
| 76 | Pumpe |
| 78 | Drei-Wege-Ventil |
| 80 | Drei-Wege-Ventil |
| 82 | Drei-Wege-Ventil |
| 84 | Bypassleitung |
| 86 | erste Leitung |
| 87 | zweite Leitung |
| 88 | dritte Leitung |
| 90 | Auslass-Leitung des elektrischen Erhitzers |
| 92 | Einlass-Leitung des elektrischen Erhitzers |
| 100 | Backofenanlage |
| 110 | Backofen |
| 120 | Pufferspeicher |

**Patentansprüche**

1. Backofenanlage (100) aufweisend einen Hybrid-Thermoölerhitzer (1) und mindestens einen Backofen (110), der mittels Thermoöl (70) beheizt ist, wobei der Hybrid-Thermoölerhitzer (1) einen befeuerten Erhitzer (20) zum Erhitzen des Thermoöls (70) aufweist, **dadurch gekennzeichnet, dass** der Hybrid-Thermoölerhitzer (1) weiterhin einen elektrischen Erhitzer (10) zum Erhitzen des Thermoöls (70) aufweist, wobei der elektrische Erhitzer (10) und der befeuerte Erhitzer (20) strömungstechnisch in Reihe verschaltet sind.

2. Backofenanlage (100) gemäß Anspruch 1, wobei

   a. der elektrische Erhitzer (10) strömungstechnisch vor dem befeuerten Erhitzer (20) verschaltet ist; oder
   b. der elektrische Erhitzer (10) strömungstechnisch nach dem befeuerten Erhitzer (20) verschaltet ist; oder
   c. der elektrische Erhitzer (10) strömungstechnisch vor dem befeuerten Erhitzer (20) verschaltet ist und ein weiterer elektrischer Erhitzer (10') strömungstechnisch nach dem befeuerten Erhitzer (20) verschaltet ist.

3. Backofenanlage (100) gemäß einem der Ansprüche 1 oder 2, wobei die Wärmeleistung des elektrischen Erhitzers (10) kleiner ist als die Wärmeleistung des befeuerten Erhitzers (20).

4. Backofenanlage (100) gemäß einem der Ansprüche 1 bis 3, wobei die Leistung des elektrischen Erhitzers (10) kleiner ist als die benötigte Gesamtwärmeleistung einer vom Hybrid-Thermoölerhitzer (1) zu beheizenden Backofenanlage (100).

5. Backofenanlage (100) gemäß einem der Ansprüche 1 bis 4, wobei der elektrische Erhitzer (10) durch Strom (42, 52, 62) aus regenerativen Quellen (40, 50, 60), insbesondere durch Photovoltaikstrom (42) und/oder Windstrom (52) und/oder Biogasstrom (62) betrieben wird.

6. Backofenanlage (100) gemäß einem der Ansprüche 1 bis 5, weiterhin aufweisend:

   a. eine Photovoltaikanlage (40), die den elektrischen Erhitzer (10) mit Photovoltaikstrom (42) versorgt; und/oder
   b. eine Windkraftanlage (50), die den elektrischen Erhitzer (10) mit Windstrom (52) versorgt; und/oder
   c. eine Biogasanlage (60), die den elektrischen Erhitzer (10) mit Biogasstrom (62) versorgt.

7. Backofenanlage (100) gemäß einem der Ansprüche 1 bis 6, wobei der befeuerte Erhitzer (20) ein Thermoöl-Gaskessel, ein Thermoöl-Ölkessel oder ein Thermoöl-Biomassekessel ist.

8. Backofenanlage (100) gemäß einem der Ansprüche 1 bis 7, wobei der elektrische Erhitzer (10) ein oder mehrere elektrische Heizregister (12) umfasst.

9. Backofenanlage (100) gemäß einem der Ansprüche 1 bis 8, wobei der elektrische Erhitzer (10) und der befeuerte Erhitzer (20) in einem gemeinsamen Gehäuse (30) angeordnet sind.

10. Backofenanlage (100) gemäß Anspruch 1, weiterhin aufweisend einen Thermoöl-Pufferspeicher (120), welcher bevorzugt hydraulisch parallel zum elektrischen Erhitzer (10) verschaltet ist.

11. Verfahren zum Beheizen einer Backofenanlage (100) aufweisend die folgenden Schritte:

   Bereitstellen eines Hybrid-Thermoölerhitzers (1) nach einem der Ansprüche 1-10;
   Aufheizen von Thermoöl (70) mittels des elektrischen Erhitzers (10);
   Aufheizen des Thermoöls (70) mittels des befeuerten Erhitzers (20); und
   Beheizen eines Backofens (110) mit dem Thermoöl (70).

12. Verfahren zum Beheizen einer Backofenanlage (100) gemäß Anspruch 11, wobei zum Aufheizen von Thermoöl (70) mittels des elektrischen Erhitzers (10) Strom (42, 52, 62) aus regenerativen Quellen (40, 50, 60), insbesondere Photovoltaikstrom (42) und/oder Windstrom (52) und/oder Biogasstrom (62), verwendet wird.

13. Verfahren zum Beheizen einer Backofenanlage (100) gemäß einem der Ansprüche 11 oder 12, wobei das Aufheizen von Thermoöl (70) mittels des elektrischen Erhitzers (10) auf ein Temperaturniveau unterhalb einer benötigten Vorlauftemperatur erfolgt und anschließend das Aufheizen von Thermoöl (70) mittels des befeuerten Erhitzers (20) auf die benötigte Vorlauftemperatur erfolgt.

14. Verfahren zum Beheizen einer Backofenanlage (100) gemäß einem der Ansprüche 11 oder 12, wobei das Aufheizen von Thermoöl (70) mittels des elektrischen Erhitzers (10) auf ein erstes Temperaturniveau unterhalb einer benötigten Vorlauftemperatur erfolgt, anschließend das Aufheizen von Thermoöl (70) mittels des befeuerten Erhitzers (20) auf ein zweites, höheres Temperaturniveau unterhalb der benötigten Vorlauftemperatur erfolgt und anschließend ein weiteres Aufheizen von Thermoöl (70) durch einen weiteren elektrischen Erhitzer (10') auf die benötigte Vorlauftemperatur erfolgt.

## Claims

1. Baking oven system (100) comprising a hybrid thermal oil heater (1) and at least one baking oven (110) which is heated by means of thermal oil (70), wherein the hybrid thermal oil heater (1) comprises a fired heater (20) for heating the thermal oil (70); **characterized in that** the hybrid thermal oil heater (1) furthermore comprises an electric heater (10) for heating the thermal oil (70), wherein the electric heater (10) and the fired heater (20) are connected in series in terms of flow.

2. Baking oven system (100) according to claim 1, wherein

   a. the electric heater (10) is connected upstream of the fired heater (20) in terms of flow; or
   b. the electric heater (10) is connected downstream of the fired heater (20) in terms of flow; or
   c. the electric heater (10) is connected upstream of the fired heater (20) in terms of flow and a further electric heater (10') is connected downstream of the fired heater (20) in terms of flow.

3. Baking oven system (100) according to one of claims 1 or 2, wherein the heat output of the electric heater (10) is less than the heat output of the fired heater (20).

4. Baking oven system (100) according to one of claims 1 to 3, wherein the output of the electric heater (10) is less than the required total heat output of a baking oven system (100) to be heated by the hybrid thermal oil heater (1).

5. Baking oven system (100) according to one of claims 1 to 4, wherein the electric heater (10) is operated by current (42, 52, 62) from regenerative sources (40, 50, 60), in particular by photovoltaic current (42) and/or wind current (52) and/or biogas current (62).

6. Baking oven system (100) according to one of claims 1 to 5, further comprising:

   a. a photovoltaic system (40) which supplies the electric heater (10) with photovoltaic current (42); and/or
   b. a wind turbine (50) which supplies the electric heater (10) with wind current (52); and/or
   c. a biogas system (60) which supplies the electric heater (10) with biogas current (62).

7. Baking oven system (100) according to one of claims 1 to 6, wherein the fired heater (20) is a thermal oil gas boiler, a thermal oil oil boiler or a thermal oil biomass boiler.

8. Baking oven system (100) according to one of claims 1 to 7, wherein the electric heater (10) comprises one or more electric heating registers (12).

9. Baking oven system (100) according to one of claims 1 to 8, wherein the electric heater (10) and the fired heater (20) are arranged in a common housing (30).

10. Baking oven system (100) according to claim 1, further comprising a thermal oil buffer storage (120) which is preferably connected hydraulically in parallel with the electric heater (10).

11. Method for heating a baking oven system (100) comprising the following steps:

   providing a hybrid thermal oil heater (1) according to one of claims 1-10;
   heating thermal oil (70) by means of the electric heater (10);
   heating the thermal oil (70) by means of the fired heater (20); and
   heating a baking oven (110) with the thermal oil (70).

12. Method for heating a baking oven system (100) according to claim 11, wherein current (42, 52, 62) from regenerative sources (40, 50, 60), in particular photovoltaic current (42) and/or wind current (52) and/or biogas current (62), is used for heating thermal oil (70) by means of the electric heater (10).

13. Method for heating a baking oven system (100) according to one of claims 11 or 12, wherein the heating of thermal oil (70) by means of the electric heater (10) is carried out to a temperature level below a required supply temperature and subsequently the heating of thermal oil (70) by means of the fired heater (20) is carried out to the required supply temperature.

14. Method for heating a baking oven system (100) according to one of claims 11 or 12, wherein the heating of thermal oil (70) by means of the electric heater (10) is carried out to a first temperature level below a required supply temperature, subsequently the heating of thermal oil (70) by means of the fired heater (20) is carried out to a second, higher temperature level below the required supply temperature and subsequently a further heating of thermal oil (70) by a further electric heater (10') is carried out to the required supply temperature.

**Revendications**

1. Installation de four de cuisson (100) comportant un réchauffeur d'huile thermique hybride (1) et au moins un four de cuisson (110) qui est chauffé au moyen d'huile thermique (70), dans laquelle le réchauffeur d'huile thermique hybride (1) comporte un réchauffeur alimenté (20) pour chauffer l'huile thermique (70) ; **caractérisée en ce que** le réchauffeur d'huile thermique hybride (1) comporte par ailleurs un réchauffeur électrique (10) pour chauffer l'huile thermique (70), dans laquelle le réchauffeur électrique (10) et le réchauffeur alimenté (20) sont connectés en série selon une technique de communication fluidique.

2. Installation de four de cuisson (100) selon la revendication 1, dans laquelle

   a. le réchauffeur électrique (10) est connecté en amont du réchauffeur alimenté (20) selon une technique de communication fluidique ; ou
   b. le réchauffeur électrique (10) est connecté en aval du réchauffeur alimenté (20) selon une technique de communication fluidique ; ou
   c. le réchauffeur électrique (10) est connecté en amont du réchauffeur alimenté (20) selon une technique de communication fluidique et un autre réchauffeur électrique (10') est connecté en aval du réchauffeur alimenté (20) selon une technique de communication fluidique.

3. Installation de four de cuisson (100) selon l'une des revendications 1 ou 2, dans laquelle la puissance thermique du réchauffeur électrique (10) est inférieure à la puissance thermique du réchauffeur alimenté (20).

4. Installation de four de cuisson (100) selon l'une des revendications 1 à 3, dans laquelle la puissance du réchauffeur électrique (10) est inférieure à la puissance thermique totale requise d'une installation de four de cuisson (100) à chauffer par le réchauffeur d'huile thermique hybride (1).

**5.** Installation de four de cuisson (100) selon l'une des revendications 1 à 4, dans laquelle le réchauffeur électrique (10) est alimenté par du courant (42, 52, 62) provenant de sources renouvelables (40, 50, 60), en particulier par du courant photovoltaïque (42) et/ou du courant éolien (52) et/ou du courant de biogaz (62).

**6.** Installation de four de cuisson (100) selon l'une des revendications 1 à 5, comportant par ailleurs :

a. une installation photovoltaïque (40) qui alimente le réchauffeur électrique (10) en courant photovoltaïque (42) ; et/ou
b. une éolienne (50) qui alimente le réchauffeur électrique (10) en courant éolien (52) ; et/ou
c. une installation de biogaz (60) qui alimente le réchauffeur électrique (10) en flux de biogaz (62).

**7.** Installation de four de cuisson (100) selon l'une des revendications 1 à 6, dans laquelle le réchauffeur alimenté (20) est une chaudière à gaz à huile thermique, une chaudière à fioul à huile thermique ou une chaudière à biomasse à huile thermique.

**8.** Installation de four de cuisson (100) selon l'une des revendications 1 à 7, dans laquelle le réchauffeur électrique (10) comprend un ou plusieurs éléments chauffants électriques (12).

**9.** Installation de four de cuisson (100) selon l'une des revendications 1 à 8, dans laquelle le réchauffeur électrique (10) et le réchauffeur alimenté (20) sont disposés dans un boîtier commun (30).

**10.** Installation de four de cuisson (100) selon la revendication 1, comportant par ailleurs un accumulateur tampon d'huile thermique (120), qui est de manière préférée connecté hydrauliquement en parallèle par rapport au réchauffeur électrique (10).

**11.** Procédé de chauffage d'une installation de four de cuisson (100) comportant les étapes suivantes :

obtention d'un réchauffeur à huile thermique hybride (1) selon l'une des revendications 1 à 10 ;
chauffage d'huile thermique (70) au moyen du réchauffeur électrique (10) ;
chauffage de l'huile thermique (70) au moyen du réchauffeur alimenté (20) ; et
chauffage d'un four de cuisson (110) avec l'huile thermique (70).

**12.** Procédé de chauffage d'une installation de four de cuisson (100) selon la revendication 11, dans lequel, pour chauffer de l'huile thermique (70) au moyen du réchauffeur électrique (10), est utilisé du courant (42, 52, 62) provenant de sources renouvelables (40, 50, 60), en particulier du courant photovoltaïque (42) et/ou du courant éolien (52) et/ou du courant de biogaz (62).

**13.** Procédé de chauffage d'une installation de four de cuisson (100) selon l'une des revendications 11 ou 12, dans lequel le chauffage d'huile thermique (70) est effectué au moyen du réchauffeur électrique (10) à un niveau de température inférieur à une température de départ requise, puis le chauffage d'huile thermique (70) est effectué au moyen du réchauffeur alimenté (20) à la température de départ requise.

**14.** Procédé de chauffage d'une installation de four de cuisson (100) selon l'une des revendications 11 ou 12, dans lequel le chauffage d'huile thermique (70) est effectué au moyen du réchauffeur électrique (10) à un premier niveau de température inférieur à une température de départ requise, puis le chauffage d'huile thermique (70) est effectué au moyen du réchauffeur alimenté (20) à un deuxième niveau de température plus élevé inférieur à la température de départ requise puis un chauffage supplémentaire d'huile thermique (70) par un autre réchauffeur électrique (10') à la température de départ requise est effectué.

Fig. 1

Fig. 3

Fig. 2

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10107086 A1
- DE 102009048360 A1
- DE 102013223278 B4
- EP 2746148 A1
- DE 2715954 A1
- EP 1600057 A1
- EP 2956536 B1